# EUROPÄISCHE PATENTSCHRIFT

(11) **EP 3 885 688 B1**
(45) Veröffentlichungstag und Bekanntmachung des Hinweises auf die Patenterteilung: **30.08.2023**
(21) Anmeldenummer: 21153929.1
(22) Anmeldetag: 28.01.2021
(51) Int. Cl.: F28D 20/00, F24H 1/18, F16L 59/065, B65D 81/38

(54) **VORRICHTUNG ZUR THERMISCHEN DÄMMUNG VON EINEM BEHÄLTER, INSBESONDERE EINES WARMWASSERSPEICHERS**
THERMAL INSULATION DEVICE FOR A CONTAINER, IN PARTICULAR A HOT WATER STORAGE DEVICE
DISPOSITIF D'ISOLATION THERMIQUE D'UN RÉSERVOIR, EN PARTICULIER D'UN RÉSERVOIR D'EAU CHAUDE

(30) Priorität: 24.03.2020 DE 202020101574 U
(43) Veröffentlichungstag der Anmeldung: 29.09.2021
(73) Patentinhaber: va-Q-tec AG, 97080 Würzburg (DE)
(72) Erfinder: Bock, Tobias, 97318 Kitzingen (DE); Taraschewski, Thomas, 97070 Würzburg (DE); Mauder, Tobias, 97072 Würzburg (DE); Dr. Kuhn, Joachim, 97074 Würzburg (DE)
(74) Vertreter: Gleim, Christian Ragnar

(56) Entgegenhaltungen:
- EP-A1- 3 147 584
- EP-A2- 0 949 444
- WO-A1-2017/144609
- DE-A1-102017 114 810
- DE-U1-202004 010 695
- DE-U1-202011 103 204
- DE-U1-202012 006 988

## Beschreibung

Die Erfindung betrifft eine Vorrichtung zur thermischen Dämmung von einem Behälter, insbesondere eines Warmwasserspeichers.

Konventionelle Isolierhüllen zur thermischen Dämmung von Behältern umfassen eine eigenstabile und rigide Außenhülle, welche ein Dämmmaterial aufnimmt und die eine Vliesisolierung sein kann. Die Aufgabe solcher Außenhüllen ist es, der Isolierhülle Stabilität zu verleihen, und so das Dämmmaterial formgebend an den zu dämmenden Behälter anzuordnen. Es ergibt sich zwangsläufig, dass das Dämmmaterial dabei stets an die durch die Außenhülle vorgegebene Form angepasst sein muss. Dies schränkt die Ausgestaltung der Isolierhülle enorm ein. Von der ursprünglich festgelegten Ausbildung der Isolierhülle abweichende nachträgliche Anpassungen, beispielsweise eine Veränderung ihrer Form, sind nicht möglich. Eine Vorrichtung gemäß dem Oberbegriff von Anspruch 1 ist bekannt aus dem Dokument DE 20 2004 010695 U1.

Aufgabe der vorliegenden Erfindung ist es, die Nachteile des Standes der Technik zu überwinden und insbesondere eine Vorrichtung zur thermischen Dämmung von einem Behälter bereitzustellen, welche eine nachträgliche oder zusätzliche Anbringung ermöglicht.

Die Aufgabe wird durch den Gegenstand des unabhängigen Anspruchs 1 gelöst. Vorteilhafte Aspekte der Erfindung sind Gegenstand der Unteransprüche.

Die Erfindung umfasst eine Vorrichtung zur thermischen Dämmung von einem Behälter, mit einer zumindest abschnittsweise flexiblen Außenlage, wobei an der Außenlage mindestens ein Vakuumisolationselement derart angeordnet ist, so dass das Vakuumisolationselement mit der Außenlage gegen eine Behälterwandung befestigbar ist.

Die Vorrichtung gemäß dem unabhängigen Anspruch eignet sich, dadurch dass die Außenlage zumindest abschnittsweise flexibel ausgebildet ist, besonders zur nachträglichen oder zusätzlichen Anbringung an bestehende Behälter.

Dabei kann das Vakuumisolationselement derart an der Außenlage angeordnet sein, sodass bei einer Befestigung gegen eine Behälterwandung die Außenlage das Vakuumisolationselement zumindest an der der Behälterwandung abgewandten Seite des Vakuumisolationselements vollständig umspannt.

Vorteilhafterweise umfasst die Außenlage ein Textil. Das Textil kann dabei ein Polyestergewebe oder ein Glasfaser-Textil, insbesondere ein Glasfaser-Gewebe, ein Glasfaser-Gelege oder ein Glasfaser-Vlies, sein. Das Textil kann dabei eine Dichte zwischen 50 kg/m³ und 1500 kg/m³, insbesondere zwischen 75 kg/m³ und 400 kg/m³ haben. Für eine vorteilhafte Ausgestaltung bedeutet dies ein Flächengewicht zwischen 180 g/m² und 300 g/m² bei 2 mm Dicke.

Gemäß einem vorteilhaften Aspekt ist die Außenlage in mindestens eine Richtung flexibel. Die Außenlage kann dabei derart in mindestens eine Richtung flexibel sein, um die Außenlage zumindest in eine Richtung krümmen zu können und insbesondere an eine Krümmung des Behälters anpassen zu können. Die Außenlage kann dabei auch derart in mindestens eine Richtung flexibel sein, um die Außenlage zumindest in eine Richtung dehnen zu können. Technisch wird zwischen dynamischer und bleibender Dehnung unterschieden, wobei die dynamische Dehnung der verwendeten Textilien im Bereich zwischen 20 % und 50 % bei 25 bis 100 N Kraftaufwand und je nach Richtung (quer oder längs) liegt.

Gemäß der Erfindung ist das mindestens eine Vakuumisolationselement an der Außenlage befestigt. Dabei ist das Vakuumisolationselement durch Verkleben an der Außenlage befestigt.

Bevorzugt ist die Außenlage derart ausgebildet, um an mindestens einem Befestigungspunkt an der Behälterwandung befestigt zu werden.

Besonders bevorzugt umfasst die Außenlage zumindest eine Öffnung und zumindest eine Lasche. Die zumindest eine Öffnung und die zumindest eine Lasche kann dabei der Verbindung mehrerer Isolierhüllen untereinander dienen oder der Befestigung einer Isolierhülle an dem Behälter.

Nach einem bevorzugten Aspekt hat die Außenlage eine Dicke im Bereich von 0,5 mm bis 40 mm, insbesondere 1 mm bis 5 mm. Die Dicke der Außenlage kann dabei so gewählt sein, um geeignet flexibel zu sein und um eine geeignete thermische Isolierwirkung zu erzielen.

Nach einem besonders bevorzugten Aspekt umfasst die Vorrichtung ferner mindestens ein separates Versteifungselement. Das mindestens eine separate Versteifungselement kann dabei die Außenlage zumindest abschnittsweise umgeben oder zumindest abschnittsweise in die Außenlage integriert sein. Das mindestens eine Versteifungselement kann dabei Kunststoff, wie PU-Hartschaum, Metall oder Textil umfassen.

Nach einem besonders vorteilhaften Aspekt umfasst die Vorrichtung ferner eine Innenlage mit einer Dicke von 5 mm bis 25 mm, insbesondere 10 mm bis 20 mm, wobei die Innenlage eine der Behälterwandung zugewandten Seitenfläche des Vakuumisolationselements zumindest abschnittsweise abdeckt. Die Innenlage kann dabei ein Polyesterfaservlies oder ein Glasfaser-Textil, insbesondere ein Glasfaser-Gewebe, ein Glasfaser-Gelege oder ein Glasfaser-Vlies, sein.

Vorteilhafterweise ist die Innenlage in mindestens eine Richtung flexibel. Die Innenlage kann dabei derart in mindestens eine Richtung flexibel sein, um die Innenlage zumindest in eine Richtung krümmen zu können und insbesondere an eine Krümmung des Behälters anpassen zu können. Die Innenlage kann dabei auch derart in mindestens eine Richtung flexibel sein, um die Innenlage zumindest in eine Richtung dehnen (z. B. in Längsrichtung im Bereich von 50 % bis 70 % bei 30 N bzw. in Querrichtung weniger als in Längsrichtung) zu können.

Besonders vorteilhaft hat das mindestens eine Vakuumisolationselement eine Dicke im Bereich von 1 mm bis 50 mm, insbesondere 10 mm bis 30 mm. Die Dicke des Vakuumisolationselements kann dabei so gewählt sein, um eine geeignete thermische Isolierwirkung zu erzielen.

Bevorzugt besitzt das Vakuum isolationselement eine Porengröße von kleiner 200 µm besitzt, insbesondere kleiner 30 µm, besonders vorteilhaft kleiner 1 µm.

Vorteilhafterweise umfasst das Vakuumisolationselement ein Kernmaterial aus Pyrogenen Silica, Aerogel oder EPS.

Besonders bevorzugt umfasst das Vakuumisolationselement ein pulverförmiges Kernmaterial.

Es ist außerdem bevorzugt, wenn die Vorrichtung Befestigungs- und/oder Spannelemente umfasst.

Im Folgenden wird die Erfindung anhand von Zeichnungen näher erläutert. Gleiche Bezugszeichen beschreiben gleiche Merkmale in allen Zeichnungen.

Es zeigen:
- Fig. 1: schematischer Querschnitt einer an einem Warmwasserspeicher angeordneten erfindungsgemäßen Vorrichtung in einer Frontalebene des Warmwasserspeichers;
- Fig. 2: schematischer Querschnitt der an einem Warmwasserspeicher angeordneten erfindungsgemäßen Vorrichtung aus Fig. 1 in einer Transversalebene des Warmwasserspeichers;
- Fig. 3: eine von außen auf die Vorrichtung aus Fig. 1 gerichtete perspektivische Ansicht.

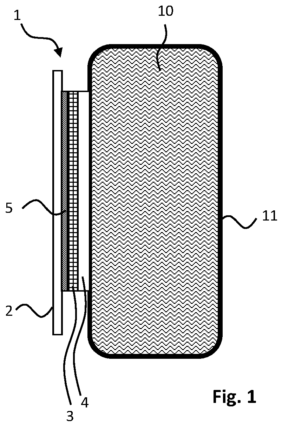

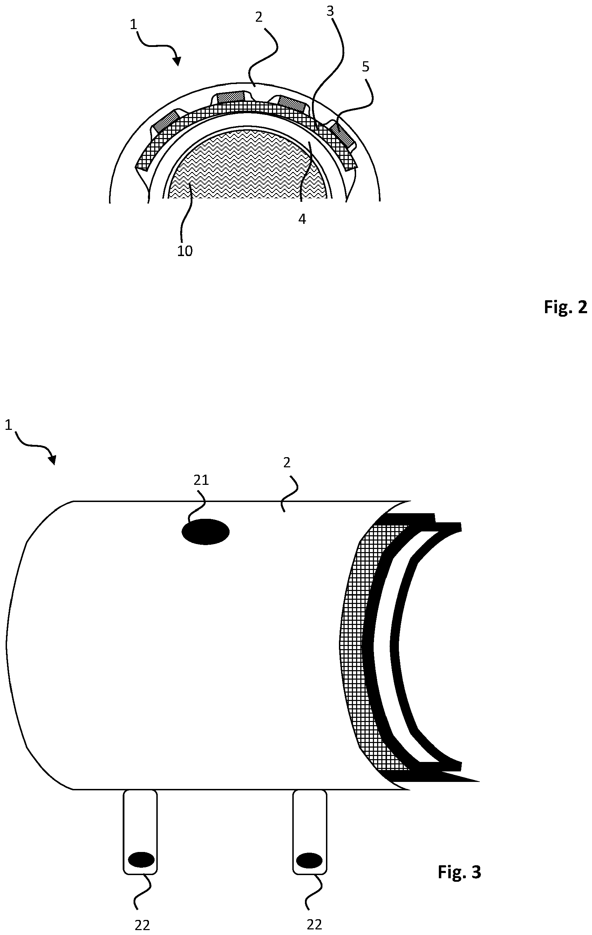

**Fig. 1** und **Fig. 2** zeigen einen schematischen Querschnitt einer an einem Warmwasserspeicher 10 angeordneten erfindungsgemäßen Vorrichtung 1. Dabei zeigt Fig. 1 einen Querschnitt in einer Frontalebene des Warmwasserspeichers 10 und Fig. 2 einen Querschnitt in einer Transversalebene des Warmwasserspeichers 10.

Die Vorrichtung 1 zur thermischen Dämmung des Behälters 10 umfasst eine zumindest abschnittsweise flexible Außenlage 2. Dabei ist an der Außenlage 2 ein Vakuumisolationselement 3 derart angeordnet, so dass das Vakuumisolationselement 3 mit der Außenlage 2 gegen die Behälterwandung 11 befestigt ist. In dem gezeigten Beispiel ist das Vakuumisolationselement 3 derart an der Außenlage 2 angeordnet, sodass bei der Befestigung gegen die Behälterwandung 11 die Außenlage 2 das Vakuumisolationselement 3 an der der Behälterwandung 11 abgewandten Seite des Vakuumisolationselements 3 vollständig umspannt.

Das gezeigte Vakuumisolationselement 3 hat eine Dicke im Bereich von 5 mm bis 40 mm. Die Dicke des Vakuumisolationselements 3 ist so gewählt, um eine geeignete thermische Isolierwirkung zu erzielen.

Die gezeigte Außenlage 2 umfasst ein Textil. Das Textil ist im gezeigten Beispiel ein Polyestervlies oder ein Glasfaser-Textil, beispielsweise ein Glasfaser-Gewebe, ein Glasfaser-Gelege oder ein Glasfaser-Vlies.

Die Außenlage 2 hat im gezeigten Beispiel eine Dicke im Bereich von 2 mm bis 10 mm. Diese Dicke gewährleistet, dass die Außenlage ausreichend flexibel ist und gleichzeitig eine ausreichende thermische Isolierwirkung erreicht wird.

Die Außenlage 2 ist dabei derart flexibel, um sich entsprechend der Krümmung der Behälterwandung 11 zu krümmen. Die Außenlage 2 ist ebenfalls derart flexibel, damit die Außenlage 2 entlang der Behälterwandung 11 dehnbar ist. Dadurch, dass die Außenlage 2 flexibel ist, ist die Vorrichtung 1 über diverse Behälter verschiedener Behältergeometrie spannbar und nicht auf eine bestimmte Behältergeometrie mit vorbestimmten Maßen festgelegt.

Erfindungsgemäß ist das Vakuumisolationselement 3 an der Außenlage 2 durch Verkleben befestigt. Die Außenlage schützt zudem das darunterliegende Vakuumisolationselement 3 vor mechanischen Belastungen.

Weiterhin umfasst die gezeigte Vorrichtung 1 mehrere separate Versteifungselemente 5. Die Versteifungselemente 5 sind abschnittsweise in der Außenlage 2 angeordnet. Durch die Versteifungselemente 5 erhält die Vorrichtung 1 zusätzliche Stabilität. Durch die lediglich abschnittsweise Anordnung der Versteifungselemente 5 in der Außenlage 2 behält die Außenlage ihre Flexibilität. Die Versteifungselemente 5 können entlang der Höhe und der Breite angeordnet sein.

Die Vorrichtung umfasst ferner eine Innenlage 4, die eine der Behälterwandung 11 zugewandten Seitenfläche des Vakuumisolationselements 3 abdeckt. Die Innenlage ist ein Polyestervlies oder ein Glasfaser-Textil, beispielsweise ein Glasfaser-Gewebe, ein Glasfaser-Gelege oder ein Glasfaser-Vlies. Die Innenlage 4 schützt das Vakuumisolationselement 3 und verhindert zusätzlich eine Luftkonvektion zwischen Vakuumisolationselement 3 und Behälterwandung 11.

Die Innenlage 4 ist dabei derart flexibel, um sich entsprechend der Krümmung der Behälterwandung 11 zu krümmen. Die Innenlage 4 ist ebenfalls derart flexibel, damit die Innenlage 4 entlang der Behälterwandung 11 dehnbar ist.

Fig. 3 zeigt eine von außen auf die Vorrichtung 1 aus Fig. 1 gerichtete perspektivische Ansicht. Die Außenlage 2 ist derart ausgebildet, dass sie an mindestens einem Befestigungspunkt an der Behälterwandung 11 (in Fig. 1 gezeigt) befestigt wird. Dies kann sowohl durch reversible Befestigungsmethoden wie Festbinden, Verhaken, Verspannen oder durch magnetische Methoden erfolgen, als auch durch irreversible Befestigungsmethoden wie Verkleben oder Verschrauben. Zur lösbaren Befestigung umfasst die gezeigte Außenlage 2 eine Öffnung 21 und Laschen 22.

Die Vorrichtung 1 kann an dem zu dämmenden Behälter 10 (in Fig. 2 gezeigt) befestigt werden, indem sie um den Behälter 10 (in Fig. 2 gezeigt) gespannt wird. Dies wird besonders durch die Flexibilität der Außenlage 2 ermöglicht. Mithilfe der Öffnung 21 und der Laschen 22 kann eine solche Vorrichtung 1 oder können mehrere solcher Vorrichtungen 1 in Reihe manschettenartig um den Behälter 10 (in Fig. 2 gezeigt) geschlossen und befestigt werden.

## Patentansprüche

1. Vorrichtung (1) zur thermischen Dämmung von einem Behälter (10), mit einer Innenlage (4) und einer zumindest abschnittsweise flexiblen Außenlage (2), wobei an der Außenlage (2) mindestens ein Vakuumisolationselement (3) derart angeordnet ist, so dass das Vakuumisolationselement (3) mit der Außenlage (2) gegen eine Behälterwandung (11) befestigbar ist, wobei das Vakuumisolationselement (3) an der Außenlage (2) durch Verkleben befestigt ist, **dadurch gekennzeichnet, dass** die Innenlage (4) auf beiden Seiten selbstklebend ausgebildet ist, um mit dem Vakuumisolationselement (3) und dem Behälter derart im eingebauten Zustand verbunden zu sein, dass die Innenlage 4 das Vakuumisolationselement (3) schützt und eine Luftkonvektion zwischen Vakuumisolationselement (3) und Behälterwandung (11) verhindert.

2. Vorrichtung nach Anspruch 1, wobei die Außenlage (2) ein Textil umfasst.

3. Vorrichtung nach einem der vorherigen Ansprüche, wobei die Außenlage (2) in mindestens eine Richtung flexibel ist.

4. Vorrichtung nach einem der vorherigen Ansprüche, wobei die Außenlage (2) derart ausgebildet ist, um an mindestens einem Befestigungspunkt an der Behälterwandung (11) befestigt zu werden.

5. Vorrichtung nach einem der vorherigen Ansprüche, wobei die Außenlage (2) zumindest eine Öffnung (21) und/oder zumindest eine Lasche (22) umfasst.

6. Vorrichtung nach einem der vorherigen Ansprüche, wobei die Außenlage (2) eine Dicke im Bereich von 0,5 mm bis 40 mm, insbesondere 1 mm bis 5 mm, hat.

7. Vorrichtung nach einem der vorherigen Ansprüche, wobei die Vorrichtung ferner mindestens ein separates Versteifungselement (5) umfasst.

8. Vorrichtung nach einem der vorherigen Ansprüche, ferner umfassend eine Innenlage (4) mit einer Dicke von 1 mm bis 50 mm, insbesondere 2 mm bis 40 mm, insbesondere 10 mm bis 20 mm, wobei die Innenlage (4) eine der Behälterwandung (11) zugewandten Seitenfläche des Vakuumisolationselements (3) zumindest abschnittsweise abdeckt.

9. Vorrichtung nach Anspruch 7, wobei die Innenlage (4) in mindestens eine Richtung flexibel ist.

10. Vorrichtung (1) nach einem der vorangehenden Ansprüche, wobei das mindestens eine Vakuumisolationselement (3) eine Dicke im Bereich von 1 mm bis 50 mm, insbesondere 10 mm bis 30 mm, hat.

11. Vorrichtung (1) nach einem der vorangehenden Ansprüche, wobei das Vakuumisolationselement (3) eine Porengröße von kleiner 200 µm besitzt, insbesondere kleiner 30 µm, besonders vorteilhaft kleiner 1 µm.

12. Vorrichtung (1) nach einem der vorangehenden Ansprüche, wobei das Vakuumisolationselement (3) ein Kernmaterial aus Pyrogenen Silica, Aerogel oder EPS umfasst.

13. Vorrichtung (1) nach einem der vorangehenden Ansprüche, wobei das Vakuumisolationselement (3) ein pulverförmiges Kernmaterial umfasst.

14. Vorrichtung (1) nach einem der vorangehenden Ansprüche, ferner umfassend Befestigungs- und/oder Spannelemente.

## Claims

1. Device (1) for thermal insulation of a container (10), comprising an inner layer (4) and an outer layer (2) which is flexible at least in sections, at least one vacuum insulation element (3) being arranged on the outer layer (2) in such a way that the vacuum insulation element (3) can be fastened to the outer layer (2) against a container wall (11), the vacuum insulation element (3) being fastened to the outer layer (2) by adhesive bonding, **characterized in that** the inner layer (4) is embodied self-adhesively on both sides in order to be connected to the vacuum insulation element (3) and the container in the installed state in such a way that the inner layer (4) protects the vacuum insulation element (3) and prevents air convection between the vacuum insulation element (3) and the container wall (11).

2. Device according to claim 1, wherein the outer layer (2) comprises a fabric.

3. Device according to any one of the preceding claims, wherein the outer layer (2) is flexible in at least one direction.

4. Device according to any one of the preceding claims, wherein the outer layer (2) is embodied so as to be fastened to the container wall (11) at at least one fastening point.

5. Device according to any one of the preceding claims, wherein the outer layer (2) comprises at least one opening (21) and/or at least one tab (22).

6. Device according to any one of the preceding claims, wherein the outer layer (2) has a thickness in the range of 0.5 mm to 40 mm, in particular 1 mm to 5 mm.

7. Device according to any one of the preceding claims, wherein the device further comprises at least one separate stiffening element (5).

8. Device according to any one of the preceding claims, further comprising an inner layer (4) having a thickness of 1 mm to 50 mm, in particular 2 mm to 40 mm, in particular 10 mm to 20 mm, wherein the inner layer (4) covers at least in sections a side surface of the vacuum insulation element (3) facing the container wall (11).

9. Device according to claim 7, wherein the inner layer (4) is flexible in at least one direction.

10. Device (1) according to any one of the preceding claims, wherein the at least one vacuum insulation element (3) has a thickness in the range from 1 mm to 50 mm, in particular 10 mm to 30 mm.

11. Device (1) according to any one of the preceding claims, wherein the vacuum insulation element (3) has a pore size of less than 200 µm, in particular less than 30 µm, particularly advantageously less than 1 µm.

12. Device (1) according to any one of the preceding claims, wherein the vacuum insulation element (3) comprises a core material of pyrogenic silica, aerogel or EPS.

13. Device (1) according to any one of the preceding claims, wherein the vacuum insulation element (3) comprises a pulverulent core material.

14. Device (1) according to any one of the preceding claims, further comprising fastening and/or tensioning elements.

## Revendications

1. Dispositif (1) pour l'isolation thermique d'un récipient (10), comprenant une couche intérieure (4) et une couche extérieure (2) flexible au moins en partie, au moins un élément d'isolation sous vide (3) étant disposé sur la couche extérieure (2) de manière à ce que l'élément d'isolation sous vide (3) puisse être fixé à la couche extérieure (2) contre une paroi du récipient (11), l'élément d'isolation sous vide (3) étant fixé à la couche extérieure (2) par collage, **caractérisé par le fait que** la couche intérieure (4) est réalisée de manière autocollante des deux côtés afin d'être reliée à l'élément d'isolation sous vide (3) et au récipient à l'état installé, de telle sorte que la couche intérieure (4) protège l'élément d'isolation sous vide (3) et empêche la convection de l'air entre l'élément d'isolation sous vide (3) et la paroi du récipient (11).

2. Dispositif selon la revendication 1, dans lequel la couche extérieure (2) comprend un tissu.

3. Dispositif selon l'une quelconque des revendications précédentes, dans lequel la couche extérieure (2) est flexible dans au moins une direction.

4. Dispositif selon l'une quelconque des revendications précédentes, dans lequel la couche extérieure (2) est conçue pour être fixée à la paroi du récipient (11) en au moins un point de fixation.

5. Dispositif selon l'une quelconque des revendications précédentes, dans lequel la couche extérieure (2) comprend au moins une ouverture (21) et/ou au moins une languette (22).

6. Dispositif selon l'une quelconque des revendications précédentes, dans lequel la couche extérieure (2) a une épaisseur comprise entre 0,5 mm et 40 mm, en particulier entre 1 mm et 5 mm.

7. Dispositif selon l'une quelconque des revendications précédentes, dans lequel le dispositif comprend en outre au moins un élément raidisseur (5) séparé.

8. Dispositif selon l'une quelconque des revendications précédentes, comprenant en outre une couche intérieure (4) d'une épaisseur de 1 mm à 50 mm, en particulier de 2 mm à 40 mm, en particulier de 10 mm à 20 mm, dans lequel la couche intérieure (4) recouvre au moins en partie une surface latérale de l'élément d'isolation sous vide (3) faisant face à la paroi du récipient (11).

9. Dispositif selon la revendication 7, dans lequel la couche intérieure (4) est flexible dans au moins une direction.

10. Dispositif (1) selon l'une quelconque des revendications précédentes, dans lequel le au moins un élément d'isolation sous vide (3) a une épaisseur comprise entre 1 mm et 50 mm, en particulier entre 10 mm et 30 mm.

11. Dispositif (1) selon l'une quelconque des revendications précédentes, dans lequel l'élément isolant sous vide (3) a une taille de pore inférieure à 200 µm, en particulier inférieure à 30 µm, de manière particulièrement avantageuse inférieure à 1 µm.

12. Dispositif (1) selon l'une quelconque des revendications précédentes, dans lequel l'élément isolant sous vide (3) comprend un matériau de coeur en silice pyrogène, aérogel ou EPS.

13. Dispositif (1) selon l'une quelconque des revendications précédentes, dans lequel l'élément d'isolation sous vide (3) comprend un matériau de coeur pulvérulent.

14. Dispositif (1) selon l'une quelconque des revendications précédentes, comprenant en outre des éléments de fixation et/ou de tension.
